# EUROPEAN PATENT APPLICATION

(11) **EP 2 177 806 A1**
(43) Date of publication of application: **21.04.2010**
(21) Application number: 09173431.9
(22) Date of filing: 19.10.2009
(51) Int. Cl.: F16L 11/08, F16L 11/112

(54) **Spiralized hose with a metallic core and method of production thereof**

(30) Priority: 17.10.2008 IT MI20081850
(71) Applicant: Industrie Plastiche Lombarde S.p.A., 21023 Besozzo (VA) (IT)
(72) Inventor: Ardo, Amelio, 21100 Varese (IT)
(74) Representative: Vanosi, Adelio Valeriano

(57) **Abstract**

A method for producing a spiralled hose reinforced with a metal spiral, comprising the steps of winding a first layer of plastic material about a rotary mandrel, depositing on said first layer a spiral-shaped metal wire, and covering said wire with a second layer of plastic material such that said second layer adheres to said first layer, to hence fix the metal spiral.

## Description

The present invention relates to a spiralled hose and a production method therefor.

More particularly it relates to a spiralled hose particularly suitable for transporting fluids of any type, including those containing abrasive bodies.

Spiralled hoses are currently produced by extruding a wall of thermoplastic material about a metal core. The extrudate (of one or more co-extruded layers) is then wound about a rotary mandrel to form a hose, in accordance with well known techniques. The hose is cooled in a cooling bath and then removed from the mandrel.

In the known art the finished hose presents a slightly undulated internal surface. This is due to the fact that the presence of the metal spiral causes non-homogeneous cooling of the thermoplastic material, with consequent different contractions, leading to an inner surface which is not perfectly smooth.

An object of the present invention is therefore to provide a spiralled hose which presents a perfectly smooth inner surface.

This and other objects are attained by a spiralled hose formed in accordance with the teachings of the accompanying claims.

Advantageously the hose of the present invention presents an improved flexibility and a particularly good wear resistance.

Further characteristics and advantages of the invention will be apparent from the description of a preferred but non-exclusive embodiment of the spiralled hose, illustrated by way of non-limiting example in the accompanying drawings, in which:
Figure 1 is a schematic view of a production plant for the hose in question;
Figure 2 is a section through some spiral turns of the hose of the present invention;
Figure 3 is a section through some spiral turns of an alternative embodiment of the hose.

With reference to said figures, these show a spiralled hose indicated overall by the reference numeral 1.

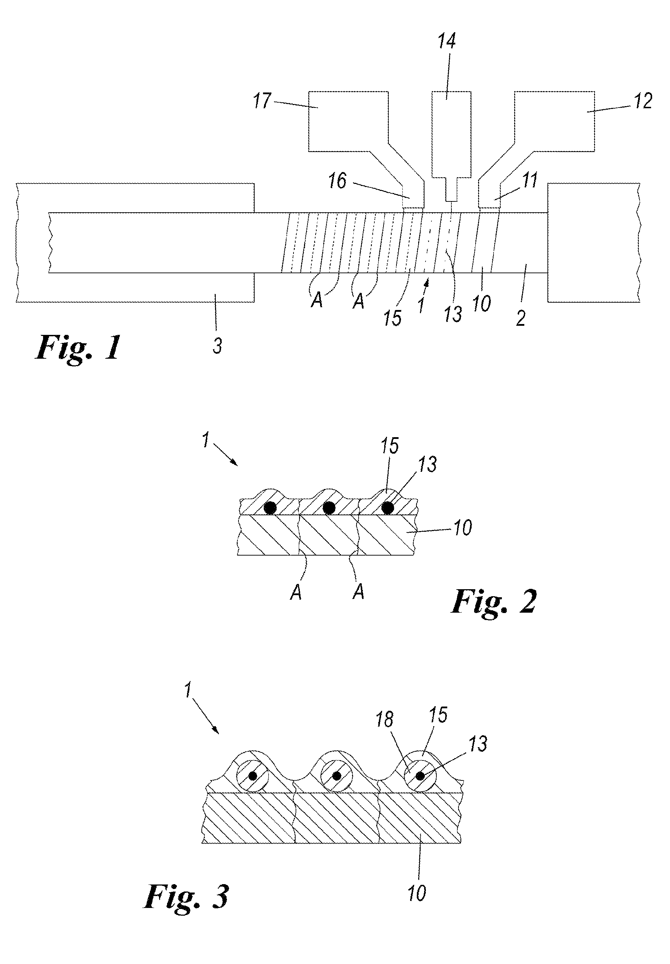

The hose 1 is formed by winding a first layer 10 of extruded plastic material about a rotary mandrel 2. This first layer is deposited on the mandrel 2 by the extrusion head 11 of a first extruder 12. The subsequent spiral turns are indicated by the reference letter A. A spiral-shaped wire 13 of metal material is then deposited downstream with respect to the extruder above the first layer 10 of thermoplastic material by a suitable apparatus 13. In Figure 1 the uncovered metal wire is represented by a dashed-and-dotted line. In a position further downstream from the point in which the metal wire is deposited, a second extrusion head 16 covers the metal wire 13 with a second layer of thermoplastic material extruded by the extruder 17. Essentially, the second layer adheres to the first layer to fix the metal spiral in sandwich manner, this being achieved in that the two layers and the metal wire are deposited in mandrel positions which are spaced apart. In Figure 1 the metal wire covered by the second layer is shown by a dashed line.

Using the aforedescribed procedure, a spiral-reinforced hose can be formed presenting a perfectly smooth inner surface in that after extrusion, this surface is brought into contact with the mandrel (which is perfectly smooth). The metal spiral is deposited on the first surface only when it has already been formed. Hence the finish of this latter is not prejudiced.

The appearance of the outer surface is corrugated if using a minimum quantity of thermoplastic material to form the second layer, whereas it is much smoother but still slightly undulated if for this layer a quantity of plastic material is used comparable to that used for the first layer.

In a different embodiment shown in Figure 3, instead of using a bare metal wire a wire completely covered by a sleeve 18 can be used. The sleeve 18 can be formed on the wire by extrusion in the moments preceding its winding onto the first layer, or a previously covered metal wire can be used.

The use of a covered wire considerably improves the flexibility characteristics of the finished hose. In this respect, the presence of a sheath around the wire avoids the presence of wrinkles on the hose surface due to the slight movement of the wire between the first and second layer. With the presence of the sheath the metal wire, although sliding slightly inside it, is guided in its movement precisely by the sheath. Essentially, its facility for bending is improved.

Advantageously, to obtain a hose which is very resistant to both internal and external abrasion, a first and second layer formed entirely of PU can be used. In such a case it is best to also form the covering sheath of PU.

In other embodiments any plastic material suitable for the final purpose of the hose can evidently be used, such as PVC or the like.

## Claims

1. A method for producing a spiralled hose reinforced with a metal spiral, comprising the steps of winding a first layer of plastic material about a rotary mandrel, depositing on said first layer a spiral-shaped metal wire, and covering said wire with a second layer of plastic material such that said second layer adheres to said first layer, to hence fix the metal spiral.

2. A method as claimed in the preceding claim, **characterised in that** before being covered by said second layer, said metal spiral is completely surrounded by a sheath of plastic material.

3. A method as claimed in one or more of the preceding claims, **characterised in that** said first layer, said spiral and said second layer are deposited in mandrel positions which are spaced apart.

4. A method as claimed in claim 2, **characterised in that** the plastic material of the sheath does not adhere to said spiral, hence leaving the metal wire free to slide to a limited extent within its interior.

5. A method as claimed in one or more of the preceding claims, **characterised in that** said first and second plastic material are PU.

6. A method as claimed in claim 2, **characterised in that** the sheath is formed of PU.

7. A spiralled hose comprising a metal reinforcement spiral fixed to a first thermoplastic material layer, forming an inner wall of said hose, by a second thermoplastic material layer placed on said spiral.

8. A hose as claimed in the preceding claim, **characterised in that** said metal spiral is completely surrounded by a sheath of thermoplastic material.

9. A hose as claimed in claim 7, **characterised in that** the hose inner surface is smooth.

10. A hose as claimed in claim 7, **characterised in that** the hose outer surface has a corrugated appearance.
